# EUROPÄISCHE PATENTSCHRIFT

(11) **EP 1 093 500 B1**
(45) Veröffentlichungstag und Bekanntmachung des Hinweises auf die Patenterteilung: **06.10.2004**
(21) Anmeldenummer: 99926437.7
(22) Anmeldetag: 27.05.1999
(51) Int. Cl.: C09J 7/00

(54) **TRÄGERFREIER HAFTKLEBRIGER FORMKÖRPER**
SUPPORT-FREE SELF-ADHESIVE MOULDED PART
CORPS MOULE AUTO-ADHESIF SANS SUPPORT

(30) Priorität: 05.06.1998 DE 19825291
(43) Veröffentlichungstag der Anmeldung: 25.04.2001
(73) Patentinhaber: Henkel Kommanditgesellschaft auf Aktien, 40191 Düsseldorf (DE)
(72) Erfinder: MÜLLER, Wolf-Rüdiger, D-40724 Hilden (DE); PETERS, Bernd, Willi, D-42657 Solingen (DE); KUHN, Jörg, D-41065 Mönchengladbach (DE)
(86) Internationale Anmeldenummer: PCT/EP1999/003662
(87) Internationale Veröffentlichungsnummer: WO 1999/064530

(56) Entgegenhaltungen:
- EP-A- 0 155 557
- FR-A- 2 158 266
- US-A- 5 049 608

## Beschreibung

Die Erfindung betrifft einen trägerfreien haftklebrigen Formkörper mit einer Glasübergangstemperatur von weniger als 10 °C, der ein Bindemittel und ein nichtionisches Tensid oder ein Gemisch aus zwei oder mehr nichtionischen Tensiden enthält, wobei als Bindemittel ein Polymerisat oder ein Copolymerisat enthalten ist. Weiterhin betrifft die Erfindung ein Verfahren zur Herstellung solcher trägerfreien haftklebrigen Formkörper und die Verwendung von nichtionischen Tensiden zur Einstellung der Klebkraft haftklebriger Formkörper.

Zur dekorativen oder funktionellen Ausstattung von privat oder gewerblich genutzten Räumen zählt häufig die Aufgabe, Informationsmaterialien aus Papier oder leichtere funktionelle Gegenstände, beispielsweise aus Metall, Glas oder Kunststoff, dauerhaft, aber wieder ablösbar an senkrechten, geneigten oder waagerechten Flächen, beispielsweise an Tischen, Schränken oder Wänden, zu befestigen. Während bei schweren und kompakten Gegenständen, die beispielsweise ein Gewicht von etwa 1 kg überschreiten, eine mechanische Befestigung, beispielsweise in Form von Schrauben oder Nägeln, in der Regel unerläßlich ist, bieten sich für die Befestigung von leichteren, beispielsweise bahn- oder bogenförmigen Gegenständen aus Papier, unterschiedliche Befestigungsmethoden an.

So werden zur Befestigung von Gegenständen aus Papier, beispielsweise Wandkalendern, Postern, Fotografien und dergleichen, häufig Reißnägel oder auf einer oder zwei Seiten haftklebrig beschichtete Klebebänder eingesetzt. Solche Befestigungsmethoden bringen in der Praxis jedoch häufig Nachteile mit sich. Reißnägel hinterlassen beispielsweise an den zur Befestigung gewählten Flächen unschöne Löcher, die nach einer Entfernung des befestigten Gegenstands in der Regel wieder beseitigt werden müssen, um den ursprünglichen optischen Eindruck der zur Befestigung gewählten Fläche wieder herzustellen. Diese Befestigungsform weist weiterhin den Nachteil auf, daß bei der Befestigung von bahn- oder bogenförmigen Materialien, die ein relativ hohes Flächengewicht aufweisen, beispielsweise Poster oder Kalender, oft ein Ausreißen der Befestigung an mindestens einem Befestigungspunkt festgestellt wird, insbesondere wenn der befestigte Gegenstand absichtlich oder unabsichtlich einer Belastung unterworfen wird.

Die Verwendung von haftklebrig beschichteten Klebestreifen weist insbesondere bei der Anwendung dieser Befestigungsform auf tapezierten Wänden große Nachteile auf. In der Regel sind Zugfestigkeit und Zugscherfestigkeit der Haftklebestoffe so groß, daß bei einer Entfernung des Klebebands von der entsprechenden Wand häufig Teile einer Tapete mitentfernt werden, was an der Wand entweder einen unschönen Gesamteindruck hinterläßt oder durch Tapezieren oder zumindest gegebenenfalls farbliches Überdecken der entsprechend geschädigten Fläche behoben werden muß.

So beschreibt beispielsweise die DE-C 43 19 023 ein druckempfindliches, trägerloses, beidseitig selbstklebendes Band und die Verwendung eines Polyacrylsäureester-Haftklebers zu dessen Herstellung.

Das Band wird beispielsweise zur dauerhaften Befestigung von Fotografien auf unterschiedliche Untergründe wie Plexiglas, Aluminium, Polystyrol, PVC oder Papier beschrieben. Es wird lediglich auf die Wiederablösbarkeit von speziell silikonisierten Folien Wert gelegt, eine Wiederablösbarkeit von Papier ist nicht vorgesehen und wird nicht erwähnt.

Die DE-A 28 04 942 betrifft ein Verfahren zur Herstellung vemetzter Haftklebefilme aus wässrigen Polymeremulsionen oder -dispersionen. Hierbei werden wäßrige Polymeremulsionen oder -dispersionen, die nach dem Trocknen einen auf dem Untergrund gut haftenden, selbstklebenden Film ergeben, mit einem wasserlöslichen Polyacrylhydrazid als Vernetzungsmittel versetzt, die erhaltene Mischung auf eine biegsame Unterlage, die beispielsweise aus Papier, Faservlies, einem Gewebe oder einer Folie aus Kunststoff oder modifiziertem Naturstoff bestehen kann, aufgetragen und auf dieser durch kurzfristige Wärmeeinwirkung bei einer Temperatur von 60 bis 160 °C vernetzt.

Die WO 97/14510 betrifft Klebstoffe auf Wasserbasis, die Mikrokugeln enthalten. Die Druckschrift beschreibt eine Klebstoffzusammensetzung auf Wasserbasis, die eine Mischung eines wässrigen Konzentrats fester, selbstklebender, elastomerer, polymerer Mikrokugeln, eines wässrigen, haftklebrigen Bindemittels auf Acrylbasis, 0,01 bis 5 Gew.-% eines Tensids und 0,01 bis 3 Gew.-% eines Mittels zur Einstellung der Viskosität enthält. Die beschriebenen Klebstoffzusammen-setzungen weisen eine asymmetrische Verteilung der Klebkraft auf und können als Tenside auch nichtionische Tenside enthalten.

Die DE-A 33 19 78 betrifft die Verwendung der Umsetzungsprodukte von Ethylenoxid mit aliphatischen vicinalen Diolen als Emulgatoren für die Emulsionspolymerisation. Beschrieben wird der Einsatz von Ringöffnungsprodukten von 1,2-Epoxyalkanen mit Ethylenglykol, die anschließend mit Ethylenoxid umgesetzt wurden, bei der Emulsionspolymerisation von Verbindungen mit olefinisch ungesättigter Doppelbindung.

Die DE-T 693 09 202 (entsprechend EP-B 0 587 332) betrifft eine acrylische Dichtungsmasse, die ein acrylisches Emulsions-Copolymerbindemittel mit einer Glasübergangstemperatur von etwa 0 bis etwa -60 °C, Zinkoxid und festes Siliciumdioxid umfaßt. Die Druckschrift erwähnt Dichtungsmassen, die ein nichtionisches Tensid auf der Basis von Octylphenol enthalten.

Klebebänder, die auch von empfindlichen Flächen wiederablösbar sein sollen, enthalten häufig eine große Menge an niedermolekularen Weichmachern. Werden solche Klebebänder dauerhaft auf saugfähigen Flächen eingesetzt, so hinterlassen sie aufgrund der Migration der Weichmachermoleküle häufig Flecken und Verfärbungen auf dem jeweiligen Untergrund. Solche Klebebänder vermeiden zwar eine mechanische Zerstörung des Untergrunds bei der Befestigung oder beim Ablösen, hinterlassen die Befestigungsstelle jedoch trotzdem in einem meist unansehlichen Zustand. Sind solche Klebebänder zudem aus dekorativen Zwecken noch gefärbt, so ist häufig auch noch ein Übertritt des Farbstoffs in das verklebte Material zu beobachten, was den unschönen Gesamteindruck an der ehemaligen Befestigungsstelle nach dem Ablösen noch verstärkt.

Es besteht daher ein Bedürfnis nach einem haftklebrigen Formkörper, der die obengenannten Nachteile nicht aufweist. Insbesondere bestand ein Bedürfnis nach einem haftklebrigen Formkörper, der eine dauerhafte Befestigung auch schwererer Gegenstände an Flächen unterschiedlichster Oberflächenbeschaffenheit und senkrechter, geneigter oder waagerechter Ausrichtung erlaubt. Weiterhin bestand ein Bedürfnis nach haftklebrigen Formkörpern, die von unterschiedlichsten Oberflächen wieder ablösbar und nach der Ablösung erneut zum dauerhaften Befestigen von Gegenständen wiedereinsetzbar sind. Weiterhin bestand ein Bedürfnis nach haftklebrigen Formkörpern, die bei nachlassender Klebkraft durch einfaches Reinigen wieder auf die ursprüngliche Klebkraft oder zumindest einen nahe an der ursprünglichen Klebkraft liegenden Wert wieder eingestellt werden können. Weiterhin bestand ein Bedürfnis nach haftklebrigen Formkörpern, die nach dem Ablösen auch nach dauerhaftem Gebrauch zur Befestigung keine Verfleckung oder Verfärbung des Untergrundes oder des befestigten Objekts verursachen.

Es war deshalb eine Aufgabe der vorliegenden Erfindung, einen haftklebrigen Formkörper zur Verfügung zu stellen, der die obengenannten Bedürfnisse erfüllt. Weiterhin war es Aufgabe der vorliegenden Erfindung, ein Verfahren zur Herstellung eines haftklebrigen Formkörpers zur Verfügung zu stellen, das zu haftklebrigen Formkörpern führt, welche die obigen Bedürfnisse erfüllen. Weiterhin war es Aufgabe der Erfindung, ein Verfahren zur Verfügung zu stellen, das es erlaubt, die Klebkraft haftklebriger Formkörper in einem weiten Bereich einzustellen.

Gelöst werden die obengenannten Aufgaben durch einen trägerfreien haftklebrigen Formkörper, der eine Glasübergangstemperatur von weniger als 10 °C aufweist, mindestens ein Bindemittel und eine bestimmte Menge eines aliphatischen oder cycloaliphatischen nichtionischen Tensids enthält.

Gegenstand der Erfindung ist daher ein trägerfreier haftklebriger Formkörper mit einer Glasübergangstemperatur von weniger als 10 °C, enthaltend mindestens 90 Gew.-% eines Bindemittels und 0,01 bis 1,44 Gew.-% eines aliphatischen oder cycloaliphatischen nichtionischen Tensids, wobei als Bindemittel ein Polymerisat oder Copolymerisat enthalten ist.

Unter einem "Formkörper" wird im Rahmen der vorliegenden Erfindung ein Gegenstand mit beliebiger Raumform verstanden. Der erfindungsgemäße Formkörper kann beispielsweise bahnförmig, bogenförmig, kugelförmig, ellipsoid, rautenförmig, sternförmig, würfelförmig, quaderförmig oder in seiner Raumform zwei- oder dreidimensional an bekannte Formen, beispielsweise aus Natur oder Technik, angelehnt sein. In einer bevorzugten Ausführungsform der Erfindung ist der Formkörper bahn- oder bogenförmig, und weist eine Dicke von etwa 0,01 bis etwa 10 mm, insbesondere etwa 0,1 bis etwa 5 mm oder etwa 0,5 bis etwa 2 mm, auf.

In einer weiteren bevorzugten Ausführungsform ist der Formkörper bahnförmig und weist die Umrisse bekannter Formen aus Natur oder Technik, beispielsweise eine Tierform oder die Form von Wasser-, Land- oder Luftfahrzeugen auf.

Bei dem erfindungsgemäßen haftklebrigen Formkörper handelt es sich um einen trägerfreien, d.h. selbsttragenden haftklebrigen Formkörper, dessen gewünschte mechanische Eigenschaften ohne ein unterstützendes Trägermaterial erzielt werden. In einer besonderen Ausführungsform der Erfindung kann jedoch mindestens eine Oberfläche des Formkörpers mit einer Beschichtung versehen sein, die zwar ablösbar, aber fester haftend als eine Beschichtung einer zweiten Oberfläche gestaltet ist. So lassen sich die haftklebrigen Formkörper der vorliegenden Erfindung beispielsweise mit einer nicht klebrigen Beschichtung zunächst als dekorative Elemente auf Oberflächen anbringen. Durch Abziehen der Beschichtung kann dann anschließend jederzeit eine Oberflächenklebrigkeit erreicht werden, welche die Befestigung eines Gegenstandes, beispielsweise eines bahn- oder bogenförmigen Gegenstandes aus Papier, auf der haftklebrigen Oberfläche des erfindungsgemäßen Formkörpers erlaubt.

Der trägerfreie haftklebrige Formkörper weist eine Glasübergangstemperatur (T_{g}) von weniger als 10 °C auf. In einer bevorzugten Ausführungsform der Erfindung weist der haftklebrige Formkörper eine Glasübergangstemperatur (T_{g}) von etwa 0 bis etwa -60 °C, insbesondere etwa -20 bis etwa -50 °C auf.

Unter der "Glasübergangstemperatur" (T_{g}) wird die Temperatur verstanden, bei der die Brown'sche Molekularbewegung längerer Kettensegmente (etwa 5 bis etwa 50 Kettenatome) eines Polymeren beginnt. Die Glasübergangstemperatur ist abhängig von der Meßmethode, wobei zur Messung beispielsweise thermisch-calorimetische, dielektrische, dynamisch-mechanische, refraktometrische oder NMR-spektroskopische Messungen eingesetzt werden können. Im Rahmen der vorliegenden Erfindung wird daher mit T_{g} diejenige Temperatur bezeichnet, die unter Einsatz von Differential Scanning Calorimetry (DSC) gemessen wurde.

Der erfindungsgemäße haftklebrige Formkörper enthält mindestens etwa 90 Gew.-% eines Bindemittels, wobei als Bindemittel mindestens ein Polymerisat oder Copolymerisat enthalten ist.

Unter einem "Bindemittel" wird im Rahmen der vorliegenden Erfindung ein Polymeres, Copolymeres oder ein Gemisch aus zwei oder mehr Polymeren oder zwei oder mehr Copolymeren oder ein Gemisch aus einem oder mehreren Polymeren mit einem oder mehreren Copolymeren verstanden, das im wesentlichen für die mechanischen, adhäsiven und kohäsiven Eigenschaften des haftklebrigen Formkörpers verantwortlich ist. Der erfindungsgemäße haftklebrige Formkörper enthält als Bindemittel mindestens ein Polymerisat oder Copolymerisat, wobei unter dem Begriff "Polymerisat" oder "Copolymerisat" eine Verbindung verstanden wird, die durch radikalische, anionische, kationische oder Gruppentransfer-Polymerisation erhältlich ist. Die im Rahmen der vorliegenden Erfindung eingesetzten Polymerisate oder Copolymerisate lassen sich demnach durch entsprechende Polymerisation von Verbindungen mit mindestens einer olefinisch ungesättigten Doppelbindung erhalten.

Vorzugsweise liegen die zur Herstellung des Bindemittels eingesetzten Polymeren oder Copolymeren in Form einer wässrigen Emulsion oder Dispersion mit einem Feststoffgehalt zwischen etwa 20 und etwa 90 Gew.-%, insbesondere zwischen etwa 40 und etwa 60 Gew.-% vor. Geeignete Emulsionen oder Dispersionen lassen sich beispielsweise durch Emulsionspolymerisation von Monomeren mit olefinisch ungesättigter Doppelbindung erhalten.

In einer bevorzugten Ausführungsform der Erfindung werden Emulsionspolymerisate eingesetzt, wie sie durch Polymerisation von Estern oder Amiden der Acryl- oder Methacrylsäure mit Alkoholen mit etwa 1 bis etwa 9 C-Atomen erhältlich sind. So können beispielsweise Polymerisate eingesetzt werden, wie sie durch Emulsionspolymerisation von Methyl-, Ethyl-, Propyl-, Isopropyl-, Butyl-, Hexyl-, Heptyl-, Octyl- oder 2-Ethylhexyl- oder Nonyl-ester der Acrylsäure oder der Methacrylsäure erhalten werden. Ebenfalls eingesetzt werden können die Polymerisate, die durch Emulsionspolymerisation von N-Alkylamiden der Acrylsäure oder Methacrylsäure erhalten werden.

Ebenfalls geeignet sind Emulsionspolymerisate wie sie durch Polymerisation von Acrylsäure oder Methacrylsäure mit Alkoholen mit 10 oder mehr C-Atomen erhältlich sind. Beispielsweise sind dies Decylacrylat, Decylmethacrylat, Isodecylacrylat, Isodecylmethacrylat, Undecylacrylat, Undecylmethacrylat, Dodecylacrylat, Dodecylmethacrylat und deren höhere Homologen mit bis zu etwa 30 C-Atomen.

Ebenfalls als Monomere zur Herstellung der als Bindemittel eingesetzten Polymerisate oder Copolymerisate geeignet sind Derivate der Acrylsäure oder Methacrylsäure, die funktionelle Gruppen wie OH-Gruppen oder Aminogruppen tragen. Unter die genannten Verbindungen fallen beispielsweise Hydroxymethylacrylat, Hydroxymethylmethacrylat, Hydroxypropylacrylat oder Hydroxypropylmethacrylat.

Weiterhin geeignet sind die Polymerisate von Acrylamiden oder substituierten Acrylamiden, Styrol oder substituierten Styrolen, Butadien, Acrylnitril oder Methacrylnitril.

Ebenso möglich ist der Einsatz von Polymerisaten oder Copolymerisaten wie sie durch Emulsionspolymerisation von Vinylestern erhältlich sind. Geeignete Vinylester sind beispielsweise Vinylacetat, Vinylpropionat, Vinyl-2-ethylhexanat sowie höhere Ester des Vinylalkohols. Ebenso geeignet sind Polymerisate von Vinlyhalogeniden. Bevorzugte Vinylhalogenide sind Vinylchlorid und Vinylidenchlorid.

In untergeordneten Mengen können auch Silicon enthaltende Monomere wie zum Beispiel Vinyltrialkoxysilane, Allyltrialkoxysilane, (Meth)acryloxyalkyltrialkoxysilane, (Meth)acryloxyalkylalkyldialkoxysilane, (Meth)acryloxyalkoxyalkyltrialkoxysilane und Mercaptoalkyltrialkoxysilane eingesetzt werden. Die obengenannten Verbindungen können alleine oder im Gemisch aus zwei oder mehr davon polymerisiert werden.

Die im Rahmen der vorliegenden Erfindung als Bindemittel einsetzbaren Polymerisate oder Copolymerisate können beispielsweise auch disoziierbare, wasserlösliche Monomere aufweisen. Hierzu zählen beispielsweise Acrylsäure, Methacrylsäure, Itaconsäure, Maleinsäure, Fumarsäure, Halbester der Maleinsäure, Crotonsäure, Vinylphosphonsäure, Vinylsulfonsäure oder 2-Acrylamido-2-methylpropansulfonsäure (AMPS) eingesetzt werden. Außer den genannten Säuren können auch deren Salze, zum Beispiel mit Alkalimetallen, Ammoniak oder primären, sekundären oder tertiären Alkylaminen eingesetzt werden. Die genannten dissoziierbaren Verbindungen sind als Comonomere entweder alleine oder als Gemisch aus zwei oder mehr davon einsetzbar.

In einer bevorzugten Ausführungsform der Erfindung wird als Bindemittel ein Polymeres eingesetzt, das durch Polymerisation eines Acrylsäure- oder Methacrylsäureesters, der etwa 2 bis etwa 8, vorzugsweise etwa 3 bis etwa 6 C-Atomen im Alkoholrest aufweist, eingesetzt. In einer weiteren bevorzugten Ausführungsform der Erfindung wird als Copolymerisat ein Copolymeres eingesetzt, das durch Copolymerisation eines Acrylsäure- oder Methacrylsäureesters mit etwa 2 bis 8, vorzugsweise etwa 3 bis etwa 6 Kohlenstoffatomen im Alkoholrest der Acrylsäure oder Methacrylsäure erhältlich ist.

Wenn das Bindemittel ein Copolymeres mit dissoziierbaren Gruppen aufweisen soll, so wird in einer bevorzugten Ausführungsform der Erfindung ein Copolymeres eingesetzt, das unter Verwendung von Acrylsäure oder Methacrylsäure oder deren Gemisch als dissoziierbares Comonomeres hergestellt wurde. Der Anteil an Acrylsäure oder Methacrylsäure oder deren Gemisch am gesamten zur Herstellung des Polymeren eingesetzten Monomerengemischs beträgt dabei etwa 0,1 bis etwa 10 Gew.-%.

In einer bevorzugten Ausführungsform der Erfindung enthält der Formkörper als Bindemittel ein Polymerisat oder ein Gemisch aus zwei oder mehr Polymerisaten oder ein Copolymerisat oder ein Gemisch aus zwei oder mehr Copolymerisaten oder ein Gemisch aus einem oder mehreren Polymerisaten und einem oder mehreren Copolymerisaten, hergestellt durch Polymerisation eines Esters der Acrylsäure oder eines Gemischs aus zwei oder mehr Estern der Acrylsäure oder eines Esters der Methacrylsäure oder eines Gemischs aus zwei oder mehr Estern der Methacrylsäure oder eines Gemischs aus einem oder mehreren Estern der Acrylsäure und einem oder mehreren Estern der Methacrylsäure mit einem linearen oder verzweigten, gesättigten oder ungesättigten Alkohol mit 1 bis 24 Kohlenstoffatomen, oder einem Gemisch aus zwei oder mehr davon.

Geeignete Bindemittelemulsionen oder -dispersionen, wie sie im Rahmen der vorliegenden Erfindung zur Herstellung der erfindungsgemäßen trägerfreien, haftklebrigen Formkörper eingesetzt werden können, sind im Handel erhältlich. So sind beispielsweise die folgenden Acrylatdispersionen einsetzbar: Rhodotak 300 (Hersteller: Rhone Poulenc), Primal J 200, Primal EP 6090, Primal E 1950, Primal LC 68, Primal 3362, Primal E 2620, Primal CA 122, Primal 1785 (Hersteller: Rohm + Haas), Acronal DS 3496 X, Acronal 290 D (Hersteller: BASF) oder Mowilith DM 772 (Hersteller: Hoechst).

Das Bindemittel ist in den erfindungsgemäßen Formkörpern zu mindestens 90 Gew.-% enthalten. In einer bevorzugten Ausführungsform enthält der Formkörper jedoch mindestens 95 Gew.-% des Bindemittels, beispielsweise mehr als 96 Gew.-%, mehr als 97 Gew.-% oder sogar mehr als 98 Gew.-%. In manchen Fällen kann der Anteil an Bindemittel auch bis zu 99 Gew.-% oder darüber betragen.

In einer weiteren bevorzugten Ausführungsform enthält der Formkörper ein Bindemittel, das mindestens 50 Gew.-% Polybutylacrylat enthält.

Neben dem oben genannten Bindemittel enthält der erfindungsgemäße Formkörper 0,01 bis 1,44 Gew.-% eines aliphatischen oder cycloaliphatischen nichtionischen Tensids.

In einer bevorzugten Ausführungsform der Erfindung ist der Formkörper im wesentlichen weitgehend frei von nichtionischen Tensiden mit aromatischem Strukturanteil, d.h., der Anteil an solchen Tensiden liegt bei weniger als 0,1 Gew.-%. bezogen auf den Formkörper.

Nichtionische Tenside, häufig auch als Niotenside bezeichnet, weisen grenzflächenaktive Eigenschaften auf, ohne dabei im wässrigen Medium Ionen zu bilden. Die Wasserlöslichkeit nichtionischer Tenside wird in der Regel durch hydrophile Polyetherketten bedingt. Zur Herstellung von nichtionischen Tensiden bedient man sich in der Regel der Ethoxylierung von Verbindungen mit aktiven Wasserstoffatomen, unter denen Anlagerungsprodukte von Ethylenoxid an Fettalkohole oder Oxoalkohole die größte Bedeutung besitzen. Einen anderen Typ von nichtionischen Tensiden stellen die Alkylpolyglykoside dar, die durch Umsetzung von Zuckern mit Fettalkoholen gewonnen werden.

Beispiele für nichtionische Tenside wie sie im Rahmen der vorliegenden Erfindung eingesetzt werden können, sind Fettalkoholpolyglykolether, Fettsäurepolyglykolester, Fettsäureamidopolyglykolether, Fettsäureaminopolyglykolether, alkoxylierte Polyole wie alkoxyliertes Glycerin, alkoxyliertes Trimethylolpropan, alkoxylierter Pentaerythrit oder alkoxyliertes Triethylolpropan, Alkyloligo- und polyglykoside, Fettsäure-N-Alkylglucamide, Polyolfettsäure-ester, Zuckerester, Sorbitanester und Polysorbate.

Ebenso als nichtionisches Tensid oder als Gemisch aus zwei oder mehr nichtionischen Tensiden sind im Rahmen der vorliegenden Erfindung die Amide von Alkylcarbonsäuren, vorzugsweise von Alkylcarbonsäuren mit 6 bis etwa 24 C-Atomen, mit Alkanolamiden, vorzugsweise Monoalkanolamide einsetzbar. Besonders bevorzugt sind Amide, die aus natürlichen oder synthetisch hergestellten Fettsäuren und Fettsäureschnitten mit Aminoethanol erhältlich sind, ganz besonders bevorzugt sind dabei die Monoethanolamide aus Kokosfettsäureschnitten, insbesondere den Fettsäureschnitten mit 8 bis 14 Kohlenstoffatomen und Ethanolamin.

Im Rahmen der vorliegenden Erfindung wird als nichtionisches Tensid in einer bevorzugten Ausführungsform eine Verbindung oder ein Gemisch aus zwei oder mehr Verbindungen der allgemeinen Formel I

R¹[-(O-CR²H-CH₂-)ₙO-CR²H-CH₂-OH]_{y} (1)

worin R¹ jeweils unabhängig für einen linearen oder verzweigten, gesättigten oder ungesättigten, gegebenenfalls mit sekundären oder tertiären OH-Gruppen substituierten Alkylrest mit 2 bis 26 C-Atomen oder einen gegebenenfalls mit sekundären oder tertiären OH-Gruppen substituierten mono- oder polycyclischen Cycloalkylrest mit 4 bis 26 C-Atomen, R² für Wasserstoff oder einen linearen oder verzweigten Alkylrest mit 1 bis etwa 10 C-Atomen, n für eine Zahl von 0 bis 200 und y für eine Zahl von 1 bis 6 steht, oder ein Alkylpolyglykosid oder ein Gemisch aus zwei oder mehr Alkylpolyglykosiden der allgemeinen Formel II

R³O-(Z)ₓ (II),

wobei R³ unabhängig für einen linearen oder verzweigten, gesättigten oder ungesättigten Alkylrest mit 2 bis 24 C-Atomen, Z unabhängig voneinander für einen Mono- oder Oligosaccharid eines Zuckers mit 5 oder 6 Kohlenstoffatomen und x für eine Zahl von 1,1 bis 5 steht, oder ein Gemisch aus zwei oder mehr Verbindungen der allgemeinen Formel I und II, eingesetzt.

In einer weiteren bevorzugten Ausführungsform ist im erfindungsgemäßen Formkörper als nichtionisches Tensid eine Verbindung oder ein Gemisch aus zwei oder mehr Verbindungen der allgemeinen Formel I oder der allgemeinen Formel II oder ein Gemisch aus zwei oder mehr Verbindungen der allgemeinen Formel I und der allgemeinen Formel II enthalten, wobei R¹ und R³ unabhängig voneinander für einen linearen oder verzweigten, gesättigten oder ungesättigten Alkylrest mit 8 bis 16 C-Atomen, R² für Wasserstoff oder Methyl, Z für einen Glucoserest und x für eine Zahl von 1,1 bis 1,4 steht.

Beispielsweise können im Rahmen der vorliegenden Erfindung als nichtionische Tenside Anlagerungsprodukte von Alkylenoxiden an lineare, aliphatische Alkohole mit 8 bis 16 C-Atomen eingesetzt werden. Als Alkylenoxide sind Ethylenoxid und Propylenoxid bevorzugt. Besonders bevorzugt ist Ethylenoxid. Typische Beispiele für die genannten Alkohole sind Fettalkohole, beispielsweise Capronalkohol, Caprylalkohol, 2-Ethylhexylalkohol, Caprinalkohol, Laurylalkohol, Isotridecylalkohol, Myristylalkohol, Cetylalkohol, Palmoleylalkohol, Stearylalkohol, Isostearylalkohol, Oleylalkohol, Elaidylalkohol, Petroselinylalkohol, Behenylalkohol, Erucylalkohol und Brassidylalkohol sowie deren technische Mischungen, die zum Beispiel bei der Hochdruckhydrierung von technischen Methylestern auf Basis von Fetten und Ölen oder Aldehyden aus der Roelen'schen Oxosynthese sowie als Monomerfraktion bei der Dimerisierung von ungesättigten Fettalkoholen anfallen. Im Rahmen dieser beispielhaften An-wendung sind technische Fettalkoholmischungen, wobei die enthaltenen Fettalkohole etwa 12 bis etwa 18 Kohlenstoffatome aufweisen, beispielsweise Kokos-, Palm-, Palmkern- oder Talgfettalkohole, besonders bevorzugt.

Im Rahmen dieser beispielhaften Anwendungen sind die Ethoxylierungsprodukte von Kokosfettalkoholen besonders bevorzugt, wobei der Ethoxy-lierungsgrad im Schnitt etwa 5 bis etwa 40, beispielsweise etwa 10 bis etwa 30, und insbesondere etwa 20 beträgt.

Weiterhin als nichtionische Tenside einsetzbar sind die Alkylpolyglykoside oder die Fettsäureglucamide.

Geeignete Alkylpolyglykoside werden beispielsweise durch die allgemeine Formel II dargestellt. Der Rest R³ steht vorzugsweise für einen Alkylrest mit etwa 6 bis etwa 22 Kohlenstoffatomen und kann sowohl linear als auch verzweigt sein. Bevorzugt sind primäre lineare oder in 2-Stellung methylverzweigte Alkylreste. Solche Alkylreste R³ sind beispielsweise 1-Octyl-, 1-Decyl-, 1-Lauryl-, 1-Myristyl-, 1-Cetyl- oder 1-Stearylreste. Besonders bevorzugt sind 1-Octyl-, 1-Decyl-, 1-Lauryl- oder 1-Myristylreste. Bei der Verwendung sogenannter "Oxo-Alkohole" als Ausgangsstoffe zur Herstellung der Alkylpolyglykoside der allgemeinen Formel II überwiegend Verbindungen, die eine ungerade Anzahl von Kohlenstoffatomen in der Alkylkette R³ aufweisen.

Die erfindungsgemäß einsetzbaren Alkylpolyglykoside der allgemeinen Formel II können beispielsweise nur einen bestimmten Alkylrest R³ enthalten. Üblicherweise werden Alkylpolyglykoside aber ausgehend von natürlichen Fetten und Ölen oder Mineralölen hergestellt. In diesem Fall liegen als Alkylreste R³ Mischungen entsprechend den Ausgangsverbindungen beziehungsweise entsprechend der jeweiligen Aufarbeitung dieser Verbindungen vor.

Besonders bevorzugt sind Alkylpolyglykoside der allgemeinen Formel II, bei denen R³
- im wesentlichen für C₈- und C₁₀-Alkylgruppen,
- im wesentlichen für C₁₂- und C₁₄-Alkylgruppen,
- im wesentlichen für C₈- bis C₁₈-Alkylgruppen oder
- im wesentlichen für C₁₂- bis C₁₆-Alkylgruppen steht.

Als Zuckerbaustein Z können beliebige Mono- oder Oligosaccharide eingesetzt werden. Üblicherweise werden Zucker mit 5 beziehungsweise 6 Kohlenstoffatomen sowie deren entsprechende Oligosaccharide eingesetzt. Solche Zucker sind beispielsweise Glucose, Fructose, Galactose, Arabinose, Ribose, Xylose, Lyxose, Allose, Altrose, Mannose, Gulose, Idose, Tallose und Sucrose. Bevorzugte Zuckerbausteine sind Glucose, Fructose, Galactose, Arabinose und Sucrose; unter diesen ist die Glucose besonders bevorzugt.

Die im Rahmen der Erfindung einsetzbaren Alkylpolyglykoside der allgemeinen Formel II enthalten im Schnitt etwa 1,1 bis 6, vorzugsweise etwa 1,1 bis 5 Zuckereinheiten. Alkylpolyglykoside mit Werten für x von 1,1 bis etwa 1,6 sind dabei besonders bevorzugt.

Auch die alkoxylierten Homologen der genannten Alkylpolyglykoside der allgemeinen Formel II können erfindungsgemäß eingesetzt werden. Diese Homologen können durchschnittlich bis zu etwa 10 Ethylenoxid- oder Propylenoxideinheiten oder deren Gemisch pro Alkylglykosideinheit enthalten.

Ebenfalls zum Einsatz in den erfindungsgemäßen Formkörpern als nichtionische Tenside geeignet sind Tenside aus der Familie der Glucamide, beispielsweise Alkyl-N-Methylglucamide, wobei der Begriff Alkyl sich auf Alkylreste mit einer Kettenlänge von etwa 6 bis etwa 14 Kohlenstoffatomen bezieht. Es kann vorteilhaft sein, wenn die beschriebenen nichtionischen Tenside nicht als einziges nichtionisches Tensid, sondern im Gemisch mit mindestens einem weiteren nichtionischen Tensid eingesetzt werden, zum Beispiel in Kombination mit Fettalkoholethoxylaten, Alkylpolyglykosiden oder in Kombination mit Fettalkoholethoxylat und Glucamid oder in Kombination mit Glucamid und Alkylpolyglykosid. Gegebenenfalls sind auch quaternäre oder noch höhere Kombinationen der hier offenbarten nichtionischen Tenside möglich. Weiterhin geeignet sind die Umsetzungsprodukte von Ethylenoxid mit unverzweigten 1,2-Diolen mit 8 bis 24 C-Atomen. Solche Produkte werden beispielsweise erhalten, indem man lineare 1,2-Epoxyalkane mit gerader Kohlenstoffzahl oder deren Mischungen der katalytischen Ringöffnung mit Ethylenglykol unterwirft und anschließend mit Ethylenoxid umsetzt. Ein solches Verfahren und die daraus entstehenden Produkte sind beispielsweise in der DE-A 33 19 782 beschrieben, auf deren Offenbarungsgehalt im Rahmen des vorliegenden Textes ausdrücklich Bezug genommen wird.

Es ist im Rahmen der vorliegenden Erfindung bevorzugt, wenn die eingesetzten nichtionischen Tenside gesättigt sind, d.h., keine C-C Doppel- oder Dreifachbindung aufweisen. Es ist außerdem im Rahmen der vorliegenden Erfindung bevorzugt, wenn die nichtionischen Tenside frei von Halogenen sind, d.h., keine Fluor-, Chlor- Brom- oder Jodatome aufweisen.

Ebenfalls Gegenstand der Erfindung ist die Verwendung einer Verbindung oder eines Gemischs aus zwei oder mehr Verbindungen der allgemeinen Formel I

R¹[-(O-CR²H-CH₂-)ₙO-CR²H-CH²-OH]_{y} (I),

worin R¹ jeweils unabhängig für einen linearen oder verzweigten, gesättigten oder ungesättigten, gegebenenfalls mit sekundären oder tertiären OH-Gruppen substituierten Alkylrest mit 2 bis 26 C-Atomen oder einen gegebenenfalls mit sekundären oder tertiären OH-Gruppen substituierten mono- oder polycyclischen Cycloalkylrest mit 4 bis 26 C-Atomen, R² für Wasserstoff oder einen linearen oder verzweigten Alkylrest mit 1 bis etwa 10 C-Atomen, n für eine Zahl von 0 bis 200 und y für eine Zahl von 1 bis 6 steht, oder eines Alkylpolyglykosids oder eines Gemischs aus zwei oder mehr Alkylpolyglykosiden der allgemeinen Formel II

R³O-(Z)ₓ (II),

wobei R³ unabhängig voneinander für einen linearen oder verzweigten, gesättigten oder ungesättigten Alkylrest mit 2 bis 24 C-Atomen, Z unabhängig voneinander für ein Mono- oder Oligosaccharid eines Zuckers mit 5 oder 6 Kohlenstoffatomen und x für eine Zahl von 1,1 bis 5 steht, oder eines Gemischs aus zwei oder mehr Verbindungen der allgemeinen Formel I und II zur Einstellung der Klebkraft eines haftklebrigen Formkörpers.

In einer bevorzugten Ausführungsform der Erfindung weist der haftklebrige Formkörper eine Glasübergangstemperatur (T_{g}) von weniger als 10 °C auf und enthält mindestens 90 Gew.-% eines Polymerisats oder Copolymerisats oder deren Gemisch.

Ein weiterer Gegenstand der Erfindung ist ein Verfahren zur Herstellung eines haftklebrigen Formkörpers, bei dem eine wässrige Dispersion, enthaltend ein Polymerisat oder ein Copolymerisat oder deren Gemisch, die nach Trocknung einen haftklebrigen Formkörper ergibt, 0,01 bis 1,44 Gew.-% eines aliphatischen oder cycloaliphatischen nichtionischen Tensids vermischt und zu einem haftklebrigen Formkörper verarbeitet wird.

Ein weiterer Gegenstand der Erfindung ist ein Verfahren zur Einstellung der Klebkraft eines haftklebrigen Formkörpers, bei dem eine wässrige Dispersion eines Polymerisats oder eines Copolymerisats oder deren Gemisch, die nach Trocknung einen haftklebrigen Formkörper ergibt, mit 0,01 bis 1,44 Gew.-% eines aliphatischen oder cycloaliphatischen nichtionischen Tensids vermischt und zu einem haftklebrigen Formkörper verarbeitet wird.

Der erfindungsgemäße haftklebrige Formkörper kann neben Bindemittel und nichtionischem Tensid noch weitere Zusatzstoffe enthalten. Als Zusatzstoffe können beispielsweise Entschäumer, Konservierungsmittel oder Farbstoffe eingesetzt werden.

Als Entschäumer eignen sich beispielsweise Fettsäurepartialester, beispielsweise Baysilon EN (Hersteller Fa. Bayer, Leverkusen) oder Polydimethylsiloxan, beispielsweise Antischaummittel SE 2 (Hersteller: Fa Wacker, Burghausen). Entschäumer können einzeln oder als Gemisch aus zwei oder mehr davon eingesetzt werden. Wenn im erfindungsgemäßen Formkörper nichtionische Tenside zum Einsatz kommen die bereits entschäumende Wirkung aufweisen, so kann auf den Einsatz von Entschäumem in der Regel ganz verzichtet werden es ist lediglich eine geringe Einsatzmenge erforderlich. Die Einsatzmenge des Entschäumers liegt in solchen Fällen bei etwa 0,05 bis etwa 0,2 Gew.-%, bezogen auf das Gewicht des Formkörpers.

Als Konservierungsmittel sind beispielsweise Isothiazolin-Bromopol-Gemische geeignet, wie sie unter dem Namen Ginser, beispielsweise Ginser 422, von der Ginser GmbH vertrieben werden. Wenn nicht auf Konservierungsmittel verzichtet werden soll, so liegt die Einsatzkonzentration der Konservierungsmittel bei etwa 0,01 bis etwa 0,1 Gew.-%, bezogen auf das Gewicht des Formkörpers.

Als Farbstoffe können beispielsweise Verbindungen eingesetzt werden, wie sie durch die Folgenden Color-Index Namen klassifiziert werden:
- Food Red 10
- Acid Blue 9
- Acid Green 16
- Acid Violet 17.

Die Einsatzkonzentration liegt, beispielsweise je nach gewünschter Farbtiefe, bei etwa 0,01 bis etwa 0,1 Gew.-%, kann jedoch, beispielsweise zur Erzielung besonderer Effekte, darüber oder darunter liegen.

Weiterhin kann der erfindungsgemäße Formkörper als weitere Zusatzstoffe beispielsweise Feststoffe wie hochdisperse Kieselsäure in einer Menge von etwa 0,1 bis etwa 1 Gew.-%, Cellulosederivate wie Carboxymethylcellulose in einer Menge von etwa 0,1 bis etwa 1 Gew.-%, Polyvinylalkohol in einer Menge von etwa 0,1 bis etwa 0,5 Gew.-% oder Polyethylenglykol in einer Menge von etwa 0,1 bis etwa 0,5 Gew.-%, jeweils bezogen auf das Gewicht des Formkörpers, enthalten.

Die Erfindung wird nachfolgend durch die Beispiele näher erläutert.

Die bei der Belastungsprüfung der einzelnen haftklebrigen Formkörper eingesetzten Untersuchungsverfahren sind:
Zur Ermittlung der Zugscherfestigkeit werden zwei Prüfkörper a und b, gegebenenfalls nach Verstärkung, durch einen entsprechenden haftklebrigen Formkörper h verbunden und mit einer Kraft F belastet.
Zur Ermittlung der Zugschälfestigkeit werden zwei Prüfkörper c und d, gegebenenfalls nach Verstärkung, durch einen entsprechenden haftklebrigen Formkörper h verbunden und mit einer Kraft F belastet.

### Beispiele:

### Herstellung der Formkörper:

90,82 Teile Primal J 200, 9,08 Teile Disponil A 4065. EXP (2 %ige Lösung) und 0,1 Teile Foammaster 306 wurden in einem Becherglas unter Rühren bei Umgebungstemperatur innerhalb von 30 Minuten gemischt und homogenisiert. Anschließend wurde die so erhaltene Dispersion entgast. Zur Herstellung der erfindungsgemäßen Formkörper wurden die Dispersionen in eine antiadhäsiv be-schichtete Form überführt und bei Temperaturen zwischen Umgebungstemperatur und 85 °C verfilmt. Bedingt durch die Füllmenge wurden Filmdicken von 0,01 mm bis 5 mm erreicht. Zur Prüfung wurden die Filme in auf definierte Größen zugeschnitten oder gestanzt.

### Prüfung I: Bestimmung der Schälfestigkeit sowie Zugscherfestigkeit an Kopier-papier

Die Prüfkörper mit den Maßen 40 mm * 80 mm wurden aus Kopierpapier ausgeschnitten. Je zwei Streifen wurden mittels der Formkörper mit den Maßen 25 mm * 25 mm * 1 mm miteinander verklebt und mit einer 1 kg Walze durch Anrollen belastet.

Als Kopierpapier wurde die Type 5015 weiß, 80g/m², Fa. Sonnecken, eingesetzt.

Bei Bestimmung der Zugscherfestigkeit wurden die Papierstreifen zusätzlich durch einseitiges Aufkleben auf Polystyrolstreifen der Dicke 4 mm verstärkt.

Die Schälfestigkeit wurde im Winkel von 90 **°** bestimmt.

Nach einer Konditionierung von 24 h bei RT und 50 % LF wurden die Festigkeiten mit Hilfe eines Zugfestigkeitsmeßgerätes der Firma Erichsen Modell 464 Meßkopf T 709/200 N vermessen (Vorschub 50 mm/min).

Die Ergebnisse sind Tabelle 1 zu entnehmen.

### Prüfung II: Bestimmung der Dauerbelastung

Die Festigkeiten wurden an folgendem Material bestimmt:
Polystyrol/Polystyrol

Die Prüfkörper mit den Maßen 26 mm * 80 mm wurden im Ultraschallbad. gereinigt und entfettet.

Mit Hilfe der haftklebrigen Formkörper mit den Maßen 26 mm * 25 mm * 1 mm, wurden nun je zwei Prüfkörper miteinander verklebt und mit einer 1 kg Walze durch Anrollen belastet.

Die Prüfmuster wurden mit Hilfe einer Bohrung am oberen Ende frei aufgehängt und am unteren Ende mit einem 200 g Gewicht beschwert.

Die Lagerung erfolgte bei RT und 50 % LF.

Die Beurteilung erfolgte objektiv: Belastungstest bestanden oder nicht bestanden. Die Ergebnisse sind Tabelle 2 zu entnehmen.

### Prüfung III Prüfung der Wiederverwendbarkeit an Kopierpapier ohne Reinigung der haftklebrigen Formkörper

Die Prüfkörper mit den Maßen 40 mm * 80 mm wurden aus Kopierpapier ausgeschnitten. Je zwei Streifen wurden mittels der haftklebrigen Formkörper mit den Maßen 25 mm * 25 mm * 1 mm miteinander verklebt und mit einer 1 kg Walze durch Anrollen belastet.

Bei Bestimmung der Zugscherfestigkeit wurden die Papierstreifen zusätzlich durch einseitiges Aufkleben auf Polystyrolstreifen der Dicke 4 mm verstärkt.

Zwischen jeder Anwendung wurden die haftklebrigen Formkörper erneut auf die oben beschriebene Weise verklebt (ohne Reinigung).

Die Festigkeiten wurden mit Hilfe eines Zugfestigkeitsmeßgerätes der Firma Erichsen Modell 464 Meßkopf T 709/200 N bei RT und 50 % LF (Luftfeuchtigkeit) vermessen (Vorschub 50 mm/min).

Die Ergebnisse sind Tabelle 3 zu entnehmen.

### Prüfung IV: Prüfung der Wiederverwendbarkeit an Kopierpapier mit mechanischer Reinigung der haftklebrigen Formkörper unter Wasser

Die Prüfkörper mit den Maßen 40 mm * 80 mm wurden aus Kopierpapier ausgeschnitten. J zwei Streifen wurden mittels der haftklebrigen Formkörper mit den Maßen 25 mm * 25 mm * 1 mm miteinander verklebt und mit einer 1 kg Walze durch Anrollen belastet.

Bei Bestimmung der Zugscherfestigkeit wurden die Papierstreifen zusätzlich durch einseitiges Aufkleben auf Polystyrolstreifen der Dicke 4 mm verstärkt.

Zwischen den beiden Anwendungen wurden die haftklebrigen Formkörper durch Anfassen mit Körperfett soweit verschmutzt, daß keine Haftung mehr meßbar war.

Anschließend wurden sie mechanisch unter fließendem Wasser gereinigt und erneut auf die oben beschriebene Weise verklebt.

Die Festigkeiten wurden mit Hilfe eines Zugfestigkeitsmeßgerätes der Firma Erichsen Modell 464 Meßkopf T 709/200 N bei RT und 50 % LF vermessen (Vorschub 50 mm/min).

Die Ergebnisse sind Tabelle 4 zu entnehmen.

### Prüfung V: Prüfung auf Verfettung sowie Verfärbungen an Kopierpapier

Bei der Prüfung auf Verfettung sowie auf Verfärbungen am Kopierpapier wurde die zur Herstellung des Formkörpers verwendete Formulierung entweder in der ursprünglichen Form (Prüfung auf Verfettung) oder mit jeweils 0,1 Gew.-% eines Farbstoffs versetzt. Anschließend wurden entsprechende Verklebungen auf Kopierpapier durchgeführt und die verklebten Prüfkörper bei den unten angegebenen Umgebungsbedingungen gelagert.

Als Farbstoffe wurden die Farbstoffe FL grün, rot und blau eingesetzt.

Die Prüfkörper mit den Maßen 40 mm * 80 mm wurden aus Kopierpapier ausgeschnitten. Je zwei Streifen wurden mittels der haftklebrigen Formkörper mit den Maßen 25 mm * 25 mm * 1 mm miteinander verklebt und mit einer 1 kg Walze durch Anrollen belastet.

Die Prüfkörper wurden nun unter folgenden Bedingungen klimatisiert:
RT (= Raumtemperatur, etwa 18 - 23 °C)
30 °C/80 % rel. Luftfeuchte
40 °C/20 % rel. Luftfeuchte
50 °C

Nach je vier Wochen (Gesamtdauer: sechs Monate) wurden die Prüfkörper einer subjektiven Beurteilung unterzogen, indem sie gegen das Licht einer 60 Watt Schreibtischlampe gehalten, und optisch auf Verfettung, Flecken sowie Verfärbungen untersucht wurden.

Kriterien: Optische Veränderungen - ja oder nein.

Die Ergebnisse sind Tabellen 5, 6, 7 und 8 zu entnehmen.

### Vergleichsprüfung I: Bestimmung der Schälfestigkeit sowie Zugscherfestigkeit an Kopierpapier

Es wurden Formkörper wie unter "Herstellung der Klebekörper" oben angegeben hergestellt, wobei statt Disponil A 4065 EXP (2 %ige Lösung) Octylphenol mit 40 Ethylenoxideinheiten eingesetzt wurde.

Die Prüfung wurde identisch zu der unter "Prüfung I" beschriebenen Prüfung durchgeführt. Die Ergebnisse sind Tabelle 9 zu entnehmen.

### Vergleichsprüfung II: Bestimmung der Dauerbelastung

Die Bestimmung der Dauerbelastung wurde mit zu Vergleichsprüfung I identischen Formkörpern vorgenommen. Die Durchführung der Vergleichsprüfung wurde unter zu "Prüfung II" identischen Prüfungsbedingungen durchgeführt. Die Ergebnisse sind Tabelle 10 zu entnehmen.

**Tabelle 1**

| Gehalt Tensid [%] | Zugscherfestigkeit [N/cm²] | Schälfestigkeit [N/25 mm] |
|---|---|---|
| 0 | teilweise Papierriß | teilweise Papierriß |
| 0,09 | 9,87 | teilweise Papierriß |
| 0,18 | 9,45 | 7,27 |
| 0,27 | 9,67 | 5,99 |
| 0,38 | 9,88 | 4,31 |
| 0,49 | 9,64 | 2,35 |

**Tabelle 2**

| Gehalt Tensid [%] | Zeit Belastung mit 32 g/cm² für 6 Monate |
|---|---|
| 0 | i.o. |
| 0,09 | i.o. |
| 0,18 | i.o. |
| 0,27 | i.o. |
| 0,38 | i.o. |
| 0,49 | i.o. |

Prüfmuster: Je zwei Streifen Polystyrol der Maße 25 mm * 80 mm * 4 mm durch einen Klebekörper mit den Maßen 25 mm * 25 mm * 1 mm durch Anrollen mit einer 1 kg Walze verklebt.

Prüfanordnung: Die Prüfkörper wurden am oberen Ende aufgehängt und am unteren Ende mit 200 g Gewichten beschwert.
Prüftemperatur: RT
Auswertung: Visuelle Beurteilung

Zugscherfestigkeit bei Dauerbelastung

**Tabelle 3**

| | Zugscherfestigkeit [N/cm²] | Schälfestigkeit [N/25 mm] |
|---|---|---|
| 1. Anwendung | 9,45 | 7,30 |
| 2. Anwendung | 8,88 | 7,15 |
| 3. Anwendung | 6,90 | 6,40 |
| 4. Anwendung | 6,32 | 5,30 |
| 5. Anwendung | 5,40 | 4,82 |
| 6. Anwendung | 5,21 | 4,35 |
| 7. Anwendung | 4,63 | 3,90 |
| 8. Anwendung | 3,04 | 2,91 |

**Tabelle 4**

| | Zugscherfestigkeit [N/cm²] | Schälfestigkeit [N/25 mm] |
|---|---|---|
| 1. Anwendung | 9,42 | 7,34 |
| n.Verschmutzun g | n. messbar | n. messbar |
| 2. Anwendung | 6,90 | 6,40 |

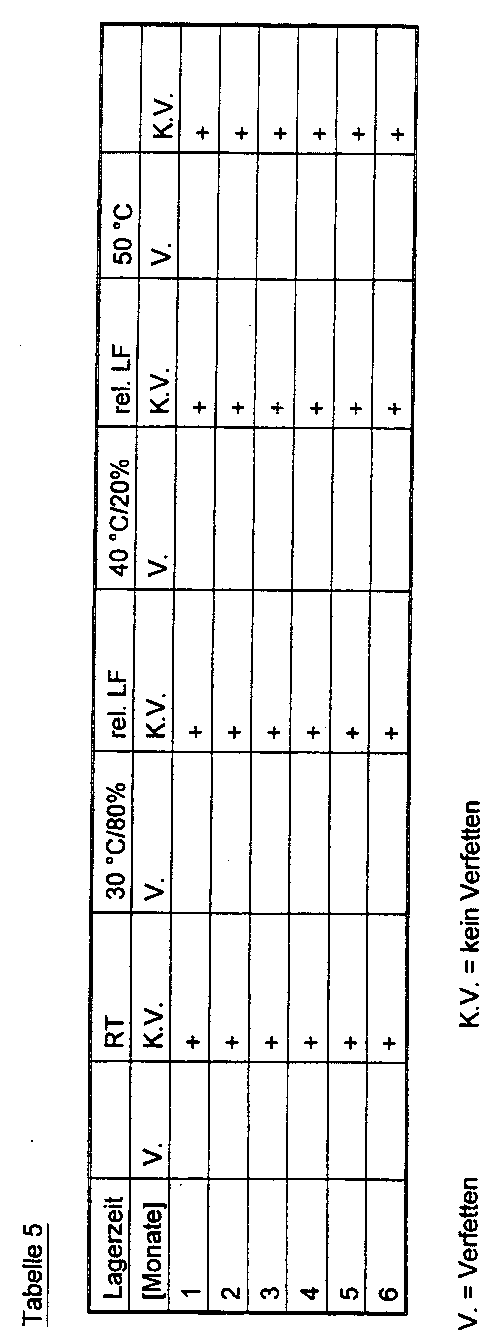

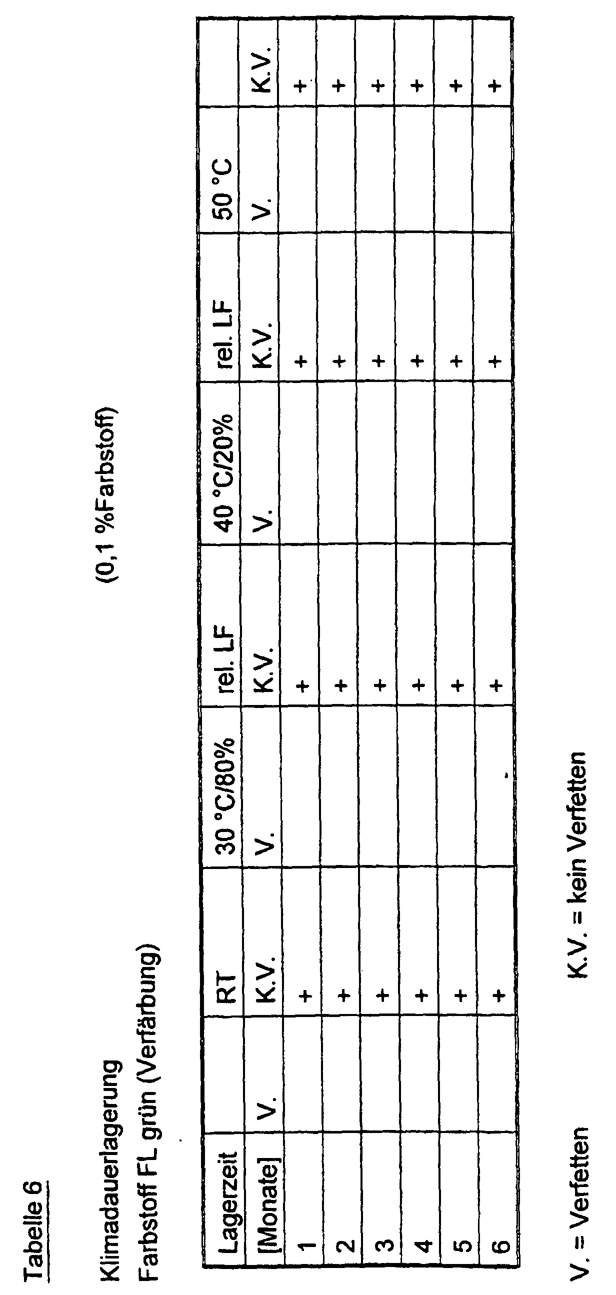

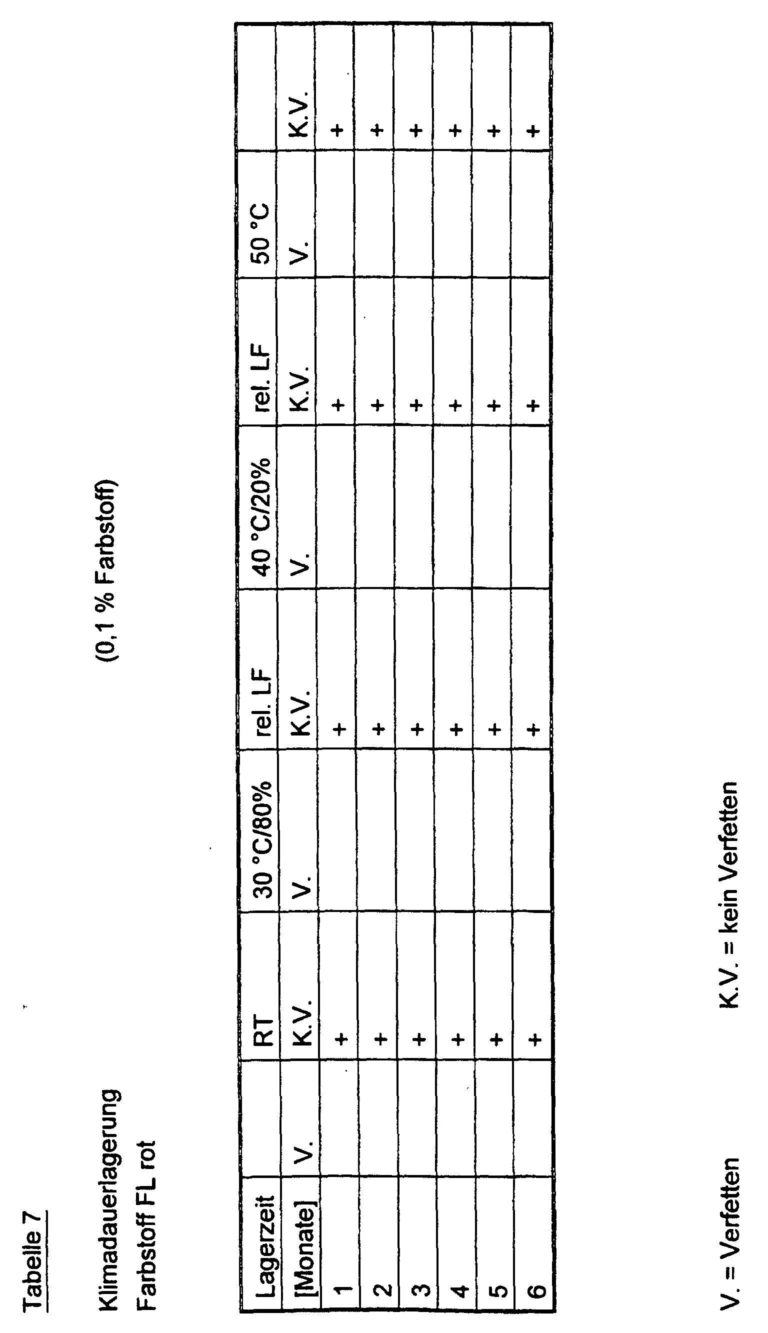

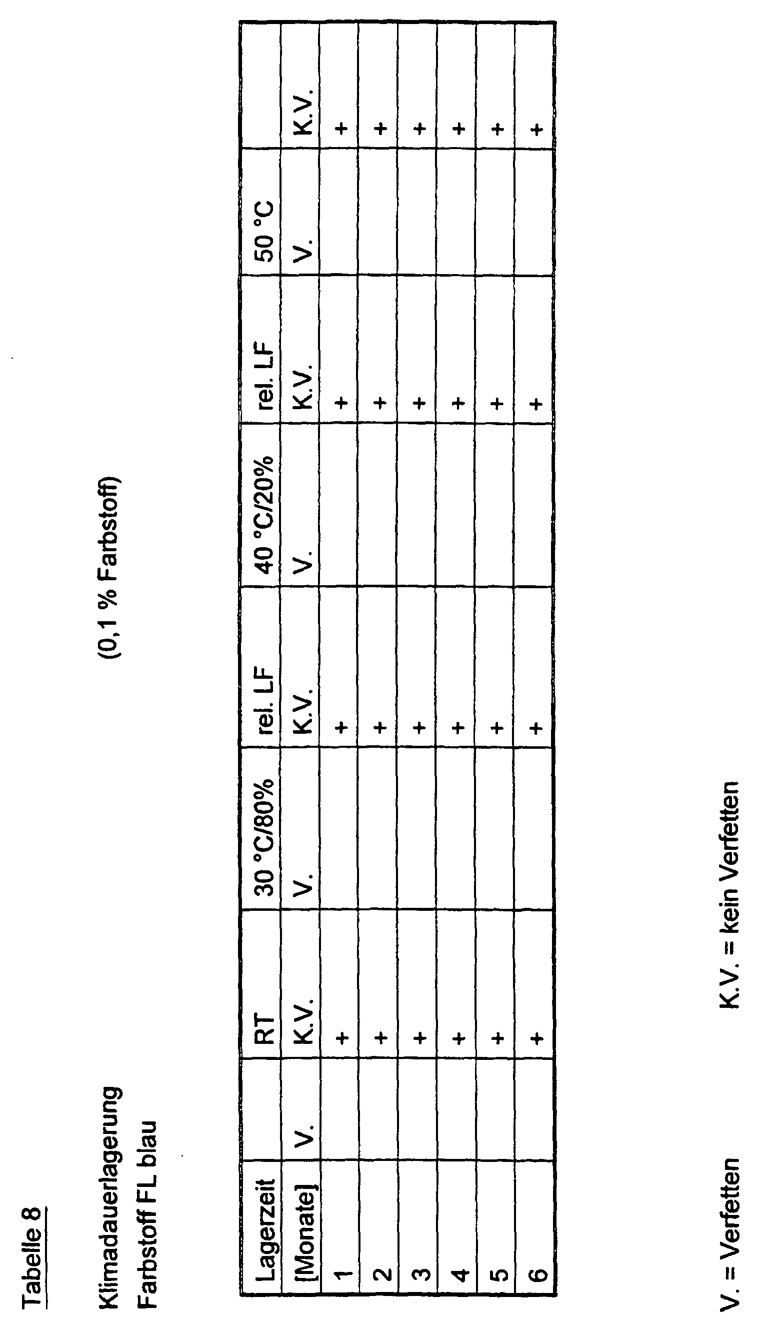

**Tabelle 9**

| Gehalt Octylphenol 40 EO [%] | Zugscherfestigkeit [N/cm²] | Schälfestigkeit [N/25 mm] |
|---|---|---|
| 0 | teilw. Papierriß | teilw. Papierriß |
| 0,09 | teilw. Papierriß | teilw. Papierriß |
| 0,18 | teilw. Papierriß | teilw. Papierriß |
| 0,27 | teilw. Papierriß | teilw. Papierriß |
| 0,38 | teilw. Papierriß | teilw. Papierriß |
| 0,54 | teilw. Papierriß | teilw. Papierriß |
| 0,63 | 9,96 | teilw. Papierriß |
| 0,8 | 9,46 | teilw. Papierriß |
| 1,08 | 8,73 | teilw. Papierriß |
| 1,21 | 8,30 | teilw. Papierriß |
| 1,45 | 7,26 | 7,12 |
| 1,61 | 6,67 | 6,72 |
| 1,83 | 5,43 | 5,98 |
| 1,99 | 5,06 | 4,23 |
| 2,24 | 4,29 | 3,85 |
| 2,51 | 3,50 | 2,77 |

**Tabelle 10**

| Dauerbelastung der Formulierung mit Octylphenol - 40 EO an Polystyrol/Polystyrol | |
|---|---|
| Gehalt Octylphenol 40 EO [%] | Zeit Belastung mit 32 g/cm² für 6 Monate |
| 0 | i.o. |
| 0,09 | i.o. |
| 0,18 | i.o. |
| 0,27 | i.o. |
| 0,38 | i.o. |
| 0,54 | i.o. |
| 0,63 | i.o. |
| 0,8 | i.o. |
| 1,08 | i.o. |
| 1,21 | i.o. |
| 1,45 | nicht i.o. |
| 1,61 | nicht i.o. |
| 1,83 | nicht i.o. |
| 1,99 | nicht i.o. |
| 2,24 | nicht i.o. |
| 2,51 | nicht i.o. |

## Patentansprüche

1. Selbsttragender haftklebriger Formkörper mit einer ersten und einer zweiten haftklebrigen Oberfläche und einer Glasübergangstemperatur (T_{g}) von weniger als 10 °C, enthaltend mindestens 90 Gew.-% eines Bindemittels und 0,01 bis 1,44 Gew.-% eines aliphatischen oder cycloaliphatischen nichtionischen Tensids, wobei als Bindemittel mindestens ein Polymerisat oder Copolymerisat enthalten ist und die erste und zweite haftklebrige Oberfläche gegenüber identischen Materialoberflächen eine im wesentlichen identische Klebkraft aufweisen.

2. Formkörper nach Anspruch 1, **dadurch gekennzeichnet, daß** als nichtionisches Tensid eine Verbindung oder ein Gemisch aus zwei oder mehr Verbindungen der allgemeinen Formel I
R¹[-(O-CR²H-CH₂-)ₙO-CR²H-CH₂-H]_{y} (I),
worin R¹ jeweils unabhängig für einen linearen oder verzweigten, gesättigten oder ungesättigten, gegebenenfalls mit sekundären oder tertiären OH-Gruppen substituierten Alkylrest mit 2 bis 26 C-Atomen oder einen gegebenenfalls mit sekundären oder tertiären OH-Gruppen substituierten mono- oder polycyclischen Cycloalkylrest mit 4 bis 26 C-Atomen, R² für Wasserstoff oder einen linearen oder verzweigten Alkylrest mit 1 bis etwa 10 C-Atomen, n für eine Zahl von 0 bis 200 und y für eine Zahl von 1 bis 6 steht, oder
ein Alkylpolyglykosid oder ein Gemisch aus zwei oder mehr Alkylpolyglykosiden der allgemeinen Formel II
R³O-(Z)ₓ (II),
wobei R³ unabhängig für einen linearen oder verzweigten, gesättigten oder ungesättigten Alkylrest mit 2 bis 24 C-Atomen, Z unabhängig voneinander für ein Mono- oder Oligosaccharid eines Zuckers mit 5 oder 6 Kohlenstoffatomen und x für eine Zahl von 1,1 bis 5 steht, oder ein Gemisch aus zwei oder mehr Verbindungen der allgemeinen Formel I und II enthalten ist.

3. Formkörper nach einem der Ansprüche 1 oder 2, **dadurch gekennzeichnet, daß** als Bindemittel ein Polymerisat oder ein Gemisch aus zwei oder mehr Polymerisaten oder ein Copolymerisat oder ein Gemisch aus zwei oder mehr Copolymerisaten oder ein Gemisch aus einem oder mehreren Polymerisaten und einem oder mehreren Copolymerisaten, hergestellt durch Polymerisation eines Esters der Acrylsäure oder eines Gemischs aus zwei oder mehr Estern der Acrylsäure oder eines Esters der Methacrylsäure oder eines Gemischs aus zwei oder mehr Estern der Methacrylsäure oder eines Gemischs aus einem oder mehreren Estern der Acrylsäure und einem oder mehreren Estern der Methacrylsäure mit einem linearen oder verzweigten, gesättigten oder ungesättigten Alkohol mit 1 bis 24 Kohlenstoffatomen, oder einem Gemisch aus zwei oder mehr davon, enthalten ist.

4. Formkörper nach einem der Ansprüche 1 bis 3, **dadurch gekennzeichnet, daß** das Bindemittel mindestens 50 Gew.-% Polybutylacrylat enthält.

5. Formkörper nach einem der Ansprüche 1 bis 4, **dadurch gekennzeichnet, daß** als nichtionisches Tensid eine Verbindung oder ein Gemisch aus zwei oder mehr Verbindungen der allgemeinen Formel I oder der allgemeinen Formel II oder ein Gemisch aus zwei oder mehr Verbindungen der allgemeinen Formel I und der allgemeinen Formel II enthalten ist, wobei R¹ und R³ für einen linearen oder verzweigten Alkylrest mit 8 bis 16 C-Atomen, R² für Wasserstoff oder Methyl, Z für einen Glucoserest und x für eine Zahl von 1,1 bis 1,4 steht.

6. Formkörper nach einem der Ansprüche 1 bis 5, **dadurch gekennzeichnet, daß** das nichtionische Tensid in einer Menge von 0,05 bis 0,8 Gew.-% enthalten ist.

7. Formkörper nach einem der Ansprüche 1 bis 6, **dadurch gekennzeichnet, daß** das Bindemittel in einer Menge von mindestens 95 Gew.-% enthalten ist.

8. Verwendung einer Verbindung oder eines Gemisch aus zwei oder mehr Verbindungen der allgemeinen Formel I
R¹[-(O-CR²H-CH₂-)ₙO-CR²CH-CH₂-OH]_{y} (I),
worin R¹ jeweils unabhängig für einen linearen oder verzweigten, gesättigten oder ungesättigten, gegebenenfalls mit sekundären oder tertiären OH-Gruppen substituierten Alkylrest mit 2 bis 26 C-Atomen oder einen gegebenenfalls mit sekundären oder tertiären OH-Gruppen substituierten mono- oder polycyclischen Cycloalkylrest mit 4 bis 26 C-Atomen, R² für Wasserstoff oder einen linearen oder verzweigten Alkylrest mit 1 bis etwa 10 C-Atomen, n für eine Zahl von 0 bis 200 und y für eine Zahl von 1 bis 6 steht, oder
eines Alkylpolyglykosids oder eines Gemischs aus zwei oder mehr Alkylpolyglykosiden der allgemeinen Formel 11
R³O-(Z)ₓ (II),
wobei R² unabhängig voneinander für einen linearen oder verzweigten, gesättigten oder ungesättigten Alkylrest mit 2 bis 24 C-Atomen, Z unabhängig voneinander für ein Mono- oder Oligosaccharid eines Zukers mit 5 oder 6 Kohlenstoffatomen und x für eine Zahl von 1,1 bis 5 steht, oder eines Gemisch aus zwei oder mehr Verbindungen der allgemeinen Formel I und II zur Einstellung der Klebkraft eines haftklebrigen Formkörpers.

9. Verwendung nach Anspruch 8, **dadurch gekennzeichnet, daß** der haftklebrige Formkörper eine Glasübergangstemperatur von weniger als 10 °C aufweist und mindestens 90 Gew.-% eines Polymerisats oder Copolymerisats oder deren Gemisch enthält.

10. Verfahren zur Herstellung eines haftklebrigen Formkörpers, bei dem eine wäßrige Dispersion, enthaltend ein Polymerisat oder ein Copolymerisat oder deren Gemisch, die nach Trocknung einen haftklebrigen Formkörper ergibt, mit 0,01 bis 1,44 Gew.-% eines aliphatischen oder cycloaliphatischen nichtionischen, Tensids vermischt und zu einem haftklebrigen Formkörper verarbeitet wird.

11. Verfahren zur Einstellung der Klebkraft eines haftklebrigen Formkörpers, bei dem eine wäßrige Dispersion eines Polymerisats oder eines Copolymerisats oder deren Gemisch, die nach Trocknung einen haftklebrigen Formkörper ergibt, mit 0,01 bis 1,44 Gew.-% eines aliphatischen oder cycloaliphatischen nichtionischen Tensids vermischt und zu einem haftklebrigen Formkörper verarbeitet wird.

## Claims

1. A self-supporting pressure-sensitively adhesive shaped article having a first and a second pressure-sensitively adhesive surface and a glass transition temperature (T_{g}) of less than 10°C, comprising at least 90% by weight of a binder and from 0.01 to 1.44% by weight of an aliphatic or cycloaliphatic nonionic surfactant, the binder present comprising at least one addition polymer or addition copolymer and the first and second pressure-sensitively adhesive surfaces having an essentially identical bond strength with respect to identical material surfaces.

2. The article as claimed in claim 1, **characterized in that** the nonionic surfactant present comprises a compound or a mixture of two or more compounds of the general formula I
R¹[-(O-CR²H-CH₂-)ₙO-CR²H-CH-OH]_{y} (I),
in which R¹ in each case independently represents a linear or branched, saturated or unsaturated alkyl radical of 2 to 26 carbon atoms, optionally substituted by secondary or tertiary OH groups, or a mono- or polycyclic cycloalkyl radical of 4 to 26 carbon atoms, optionally substituted by secondary or tertiary OH groups, R² represents hydrogen or a linear or branched alkyl radical of 1 to about 10 carbon atoms, n represents a number from 0 to 200 and y represents a number from 1 to 6, or an alkyl polyglycoside or a mixture of two or more alkyl polyglycosides of the general formula II
R³O-(Z)ₓ (II),
where R³ independently represents a linear or branched, saturated or unsaturated alkyl radical of 2 to 24 carbon atoms, Z independently at each occurrence represents a monosaccharide or oligosaccharide of a sugar having 5 or 6 carbon atoms and x represents a number from 1.1 to 5, or a mixture of two or more compounds of the general formula I and II.

3. The article as claimed in one of claims 1 or 2, **characterized in that** the binder present comprises an addition polymer or a mixture of two or more addition polymers or an addition copolymer or a mixture of two or more addition copolymers, or a mixture of one or more addition polymers and one or more addition copolymers, prepared by addition polymerization of an ester of acrylic acid or of a mixture of two or more esters of acrylic acid or of an ester of methacrylic acid or of a mixture of two or more esters of methacrylic acid, or a mixture of one or more esters of acrylic acid and one or more esters of methacrylic acid, with a linear or branched, saturated or unsaturated alcohol having 1 to 24 carbon atoms, or a mixture of two or more thereof.

4. The article as claimed in one of claims 1 to 3, **characterized in that** the binder contains at least 50% by weight of polybutyl acrylate.

5. The article as claimed in one of claims 1 to 4, **characterized in that** the nonionic surfactant present comprises a compound or a mixture of two or more compounds of the general formula I or of the general formula II, or a mixture of two or more compounds of the general formula I and of the general formula II, where R¹ and R³ represent a linear or branched alkyl radical of 8 to 16 carbon atoms, R² represents hydrogen or methyl, Z represents a glucose radical and x represents a number from 1.1 to 1.4.

6. The article as claimed in one of claims 1 to 5, **characterized in that** the nonionic surfactant is present in an amount of from 0.05 to 0.8% by weight.

7. The article as claimed in one of claims 1 to 6, **characterized in that** the binder is present in an amount of at least 95% by weight.

8. The use of a compound or of a mixture of two or more compounds of the general formula I
R¹[-(O-CR²H-CH₂-)ₙO-CR²H-CH₂-OH]_{y} (I),
in which R¹ in each case independently represents a linear or branched, saturated or unsaturated alkyl radical of 2 to 26 carbon atoms, optionally substituted by secondary or tertiary OH groups, or a mono- or polycyclic cycloalkyl radical of 4 to 26 carbon atoms, optionally substituted by secondary or tertiary OH groups, R² represents hydrogen or a linear or branched alkyl radical of 1 to about 10 carbon atoms, n represents a number from 0 to 200 and y represents a number from 1 to 6, or
an alkyl polyglycoside or a mixture of two or more alkyl polyglycosides of the general formula II
R³O-(Z)ₓ (II),
where R² independently at each occurrence represents a linear or branched, saturated or unsaturated alkyl radical of 2 to 24 carbon atoms, Z independently at each occurrence represents a monosaccharide or oligosaccharide of a sugar having 5 or 6 carbon atoms and x represents a number from 1.1 to 5, or a mixture of two or more compounds of the general formula I and II, for adjusting the bond strength of a pressure-sensitively adhesive shaped article.

9. The use as claimed in claim 8, **characterized in that** the pressure-sensitively adhesive shaped article has a glass transition temperature of less than 10°C and comprises at least 90% by weight of an addition polymer or addition copolymer or a mixture thereof.

10. A process for producing a pressure-sensitively adhesive shaped article, in which an aqueous dispersion, comprising an addition polymer or an addition copolymer or a mixture thereof, which after drying gives a pressure-sensitively adhesive shaped article, is mixed with from 0.01 to 1.44% by weight of an aliphatic or cycloaliphatic nonionic surfactant and processed to a pressure-sensitively adhesive shaped article.

11. A method of adjusting the bond strength of a pressure-sensitively adhesive shaped article, in which an aqueous dispersion of an addition polymer or of an addition copolymer or a mixture thereof, which after drying gives a pressure-sensitively adhesive shaped article, is mixed with from 0.01 to 1.44% by weight of an aliphatic or cycloaliphatic nonionic surfactant and processed to a pressure-sensitively adhesive shaped article.

## Revendications

1. Corps moulé autoadhésif autoportant comprenant une première et deuxième surfaces autoadhésives et possédant une température de transition vitreuse (Tg) inférieure à 10 °C, contenant un liant à concurrence d'au moins 90 % en poids et un agent tensioactif non ionique aliphatique ou cycloaliphatique à concurrence de 0,01 à 1,44 % en poids, ledit corps moulé contenant, à titre de liant, au moins un polymère ou au moins un copolymère et les première et deuxième surfaces autoadhésives présentant vis-à-vis de surfaces de matières identiques, une force d'adhérence essentiellement identique.

2. Corps moulé selon la revendication 1, **caractérisé en ce qu'**il contient, à titre d'agent tensioactif non ionique, un composé ou un mélange de deux composés ou plus répondant à la formule générale I
R¹[-(O-CR²H-CH₂-)ₙO-CR²H-CH₂-OH]_{y} (I),
dans laquelle R¹ représente, de manière respectivement indépendante, un radical alkyle linéaire ou ramifié, saturé ou insaturé, contenant de 2 à 26 atomes de carbone, éventuellement substitué avec des groupes OH secondaires ou tertiaires, ou bien un radical cycloalkyle monocyclique ou polycyclique, contenant de 4 à 26 atomes de carbone, éventuellement substitué avec des groupes OH secondaires ou tertiaires, R² représente un atome d'hydrogène ou un radical alkyle linéaire ou ramifié, contenant de 1 jusqu'à environ 10 atomes de carbone, n représente un nombre de 0 à 200 et y représente un nombre de 1 à 6, ou bien un alkylpolyglycoside ou un mélange de deux alkylpolyglycosides ou plus répondant à la formule générale II
R³O-(Z)ₓ (II),
dans laquelle R³ représente, de manière indépendante, un radical alkyle linéaire ou ramifié, saturé ou insaturé, contenant de 2 à 24 atomes de carbone, Z représente, de manière respectivement indépendante, un monosaccharide ou un oligosaccharide d'un sucre contenant 5 ou 6 atomes de carbone, et x représente un nombre de 1,1 à 5, ou encore un mélange de deux composés ou plus répondant aux formules générales I et II.

3. Corps moulé selon l'une quelconque des revendications 1 ou 2, **caractérisé en ce qu'**il contient, à titre de liant, un polymère ou un mélange constitué par deux polymères ou plus ou bien un copolymère ou un mélange de deux copolymères ou plus ou bien un mélange d'un ou de plusieurs polymères et d'un ou de plusieurs copolymères, préparé par polymérisation d'un ester de l'acide acrylique ou d'un mélange de deux esters ou plus de l'acide acrylique ou bien d'un ester de l'acide méthacrylique ou d'un mélange de deux esters ou plus de l'acide méthacrylique ou bien d'un mélange d'un ou de plusieurs esters de l'acide acrylique et d'un ou de plusieurs esters de l'acide méthacrylique, avec un alcool linéaire ou ramifié, saturé ou insaturé, contenant de 1 à 24 atomes de carbone, ou bien avec un mélange de deux de ces derniers ou plus.

4. Corps moulé selon l'une quelconque des revendications 1 à 3, **caractérisé en ce que** le liant contient du polyacrylate de butyle à concurrence d'au moins 50 % en poids.

5. Corps moulé selon l'une quelconque des revendications 1 à 4, **caractérisé en ce qu'**il contient, à titre d'agent tensioactif non ionique, un composé ou un mélange de deux composés ou plus répondant à la formule générale I ou à la formule générale II ou bien un mélange de deux composés ou plus répondant à la formule générale I et répondant à la formule générale II, les radicaux R¹ et R³ représentant un radical alkyle linéaire ou ramifié, contenant de 8 à 16 atomes de carbone, R² représentant un atome d'hydrogène ou un groupe méthyle, Z représentant un résidu de glucose et x représentant un nombre de 1,1 à 1,4.

6. Corps moulé selon l'une quelconque des revendications 1 à 5, **caractérisé en ce qu'**il contient l'agent tensioactif non ionique en une quantité de 0,05 à 0,8 % en poids.

7. Corps moulé selon l'une quelconque des revendications 1 à 6, **caractérisé en ce qu'**il contient le liant en une quantité d'au moins 95 % en poids.

8. Utilisation d'un composé ou d'un mélange de deux composés ou plus répondant à la formule générale I
R¹[-(O-CR²H-CH₂-)ₙO-CR²H-CH₂-OH]_{y} (I),
dans laquelle R¹ représente, de manière respectivement indépendante, un radical alkyle linéaire ou ramifié, saturé ou insaturé, contenant de 2 à 26 atomes de carbone, éventuellement substitué avec des groupes OH secondaires ou tertiaires, ou bien un radical cycloalkyle monocyclique ou polycyclique, contenant de 4 à 26 atomes de carbone, éventuellement substitué avec des groupes OH secondaires ou tertiaires, R² représente un atome d'hydrogène ou un radical alkyle linéaire ou ramifié, contenant de 1 jusqu'à environ 10 atomes de carbone, n représente un nombre de 0 à 200 et y représente un nombre de 1 à 6, ou bien d'un alkylpolyglycoside ou d'un mélange de deux alkylpolyglycosides ou plus répondant à la formule générale II
R³O-(Z)ₓ (II),
dans laquelle R³ représente, de manière indépendante, un radical alkyle linéaire ou ramifié, saturé ou insaturé, contenant de 2 à 24 atomes de carbone, Z représente, de manière respectivement indépendante, un monosaccharide ou un oligosaccharide d'un sucre contenant 5 ou 6 atomes de carbone, et x représente un nombre de 1,1 à 5, ou encore d'un mélange de deux composés ou plus répondant aux formules générales I et II, pour le réglage de la force d'adhérence d'un corps moulé autoadhésif.

9. Utilisation selon la revendication 8, **caractérisée en ce que** le corps moulé autoadhésif présente une température de transition vitreuse inférieure à 10 °C et contient un polymère ou un copolymère ou encore leur mélange à concurrence d'au moins 90 % en poids.

10. Procédé pour la préparation d'un corps moulé autoadhésif, dans lequel on mélange une dispersion aqueuse, contenant un polymère ou un copolymère ou encore leur mélange, qui procure, après séchage, un corps moulé autoadhésif, avec un agent tensioactif non ionique aliphatique ou cycloaliphatique, à concurrence de 0,01 à 1,44 % en poids, et on traite le mélange pour obtenir un corps moulé autoadhésif.

11. Procédé pour le réglage de la force d'adhérence d'un corps moulé autoadhésif, dans lequel on mélange une dispersion aqueuse d'un polymère ou d'un copolymère ou bien de leur mélange, qui procure, après le séchage, un corps moulé autoadhésif, avec un agent tensioactif non ionique aliphatique ou cycloaliphatique, à concurrence de 0,01 à 1,44 % en poids, et on traite le mélange pour obtenir un corps moulé autoadhésif.
